# EUROPÄISCHE PATENTANMELDUNG

(11) **EP 2 390 132 A2**
(43) Veröffentlichungstag der Anmeldung: **30.11.2011**
(21) Anmeldenummer: 11163437.4
(22) Anmeldetag: 21.04.2011
(51) Int. Cl.: B60N 2/44, B60N 2/22

(54) **Baugruppe und Verfahren zur Montage einer Baugruppe**

(30) Priorität: 25.05.2010 DE 102010021396
(71) Anmelder: Schaeffler Technologies GmbH & Co. KG, 91074 Herzogenaurach (DE)
(72) Erfinder: Bauer, Rudolf, 91074, Herzogenaurach (DE); Hochmuth, Harald, 91469, Hagenbüchach (DE); Plachert, Uwe, 91466, Gerhardshofen (DE)

(57) **Zusammenfassung**

Baugruppe, insbesondere Verstellmechanismus, umfassend ein Gehäuse und ein mit diesem unter Einhaltung eines Maßes oder einer Maßtoleranz verbundenes Bauteil, insbesondere ein Deckel, wobei das Gehäuse (7) und das Bauteil entlang einer Achse, entlang der das Maß oder die Maßtoleranz einzuhalten ist, ineinander oder aneinander geschoben und durch Crimpen unter plastischer Verformung miteinander verbunden sind.

## Beschreibung

Baugruppe und Verfahren zur Montage einer Baugruppe

### Beschreibung

### Gebiet der Erfindung

Die Erfindung betrifft eine Baugruppe, insbesondere einen Verstellmechanismus, umfassend ein Gehäuse und ein mit diesem unter Einhaltung eines Maßes oder einer Maßtoleranz verbundenes Bauteil, insbesondere ein Deckel.

### Hintergrund der Erfindung

Bei vielen Baugruppen, insbesondere bei Verstellmechanismen für Kraftfahrzeuge, ist es im Rahmen der Montage der Baugruppe erforderlich, ein Gehäuse mit einem anderen Bauteil, beispielsweise einem Deckel, unlösbar zu verbinden. Wünschenswert ist es dabei, dass die Verbindung möglichst schnell und kostengünstig durchgeführt werden kann. Typischerweise werden Baugruppen verschweißt, um ein Gehäuse und ein oder mehrere andere Bauteile zu verbinden. Das Verschweißen, beispielsweise mit einer Laserschweißvorrichtung, ist jedoch vergleichsweise teuer, daneben muss sorgfältig darauf geachtet werden, dass sich die beim Schweißvorgang erzeugte Wärme nicht nachteilig auf die Baugruppe auswirkt.

Zudem ist es schwierig, unterschiedlich harte Bauteile durch ein Schweißverfahren miteinander zu verbinden.

Ein Beispiel für eine derartige Baugruppe ist der in der DE 10 2006 026 392 A1 beschriebene Verstellmechanismus. Es handelt sich dabei um ein Schrittschaltwerk für eine Sitzverstellung. Sofern das Gehäuse mit einem Deckel oder einem anderen Bauteil verbunden werden soll, gestaltet sich ein Verschweißen der Baugruppe schwierig, da sich die Toleranzen der einzelnen Bestandteile addieren. Das Verschweißen muss daher mit sehr hoher Genauigkeit erfolgen, damit die Baugruppe insgesamt die festgelegten Maßtoleranzen einhalten kann, wodurch das Schweißverfahren aufwändig und teuer wird.

### Zusammenfassung der Erfindung

Der Erfindung liegt daher die Aufgabe zugrunde, eine Baugruppe, insbesondere einen Verstellmechanismus, anzugeben, die einfacher und kostengünstiger montiert werden kann.

Zur Lösung dieser Aufgabe ist bei einer Baugruppe der eingangs genannten Art erfindungsgemäß vorgesehen, dass das Gehäuse und das Bauteil entlang einer Achse, entlang der das Maß oder die Maßtoleranz einzuhalten ist, ineinander oder aneinander geschoben und durch Crimpen unter plastischer Verformung miteinander verbunden sind.

Erfindungsgemäß erfolgt die Herstellung der Baugruppe durch ein spanloses und nicht schmelzendes Verbindungsverfahren, sodass die Nachteile der herkömmlichen Schweißverfahren vermieden werden.

Eine besonders hohe Genauigkeit kann bei der erfindungsgemäßen Baugruppe erzielt werden, indem das Gehäuse und das mit diesem verbundene Bauteil, insbesondere der Deckel, vor dem Crimpen zum Einstellen der Maßtoleranz formschlüssig relativ zueinander verschiebbar sind. Das Gehäuse und/oder das mit diesem verbundene Bauteil sind so geformt, dass sie vor dem Verbinden, also vor dem Herstellen der Crimpverbindung, exakt zueinander justiert und positioniert werden können, in dieser Position erfolgt anschließend das Crimpen. Das Justieren wird dadurch erleichtert, dass das Gehäuse und das mit diesem zu verbindende Bauteil so geformt sind, dass sie aneinander oder ineinander entlang einer Achse verschiebbar sind.

Eine noch bessere Qualität der durch Crimpen erzeugten plastischen Verformung ergibt sich, wenn das Gehäuse einen Rand und/oder einen Bund aufweist, der in dem gecrimpten Bereich unterbrochen ist. Einerseits wird durch die se Unterbrechung eine gute Zugänglichkeit des umzuformenden Bereichs gewährleistet, andererseits kann ein Rand, eine Bördelung oder eine Kante sich nicht nachteilig auf die Herstellung der Crimpverbindung auswirken.

Die erfindungsgemäße Baugruppe ist besonders gut als Verstellmechanismus für eine Höhenverstellung oder eine Neigungsverstellung geeignet, insbesondere für eine Sitzverstellung eines Kraftfahrzeugs. Derartige Sitzverstellungen sind zumeist als in zwei Richtungen schaltbare Freiläufe ausgebildet, wobei der Mechanismus in einem Gehäuse angeordnet ist. Die Anbringung von Bauteilen an dem Gehäuse, beispielsweise die Montage eines Deckels, kann erfindungsgemäß durch Crimpen erfolgen, wobei zuvor das festgelegte Maß oder die Maßtoleranz eingestellt werden können.

Daneben betrifft die Erfindung ein Verfahren zur Montage einer Baugruppe, insbesondere eines Verstellmechanismus', bei dem ein Gehäuse mit einem Bauteil, insbesondere mit einem Deckel, unter Einhaltung einer Maßtoleranz verbunden wird.

Bei dem erfindungsgemäßen Verfahren ist vorgesehen, dass das Gehäuse und das Bauteil entlang einer Achse, entlang der die Maßtoleranz einzuhalten ist, ineinander oder aneinander geschoben und durch Crimpen unter plastischer Verformung miteinander verbunden werden.

Weiter Ausgestaltungen der Erfindung sind in den Unteransprüchen beschrieben.

### Kurze Beschreibung der Zeichnung

Die Erfindung wird nachfolgend anhand eines Ausführungsbeispiels unter Bezugnahme auf die Zeichnungen erläutert.

Die Zeichnungen sind schematische Darstellungen und zeigen:
- Fig. 1: eine erfindungsgemäße Baugruppe, die als in zwei Richtungen schaltbare Kupplung für eine Sitzverstellung ausgebildet ist, wobei in der linken Hälfte eine Draufsicht und in der rechten Hälfte eine geschnittene Ansicht gezeigt ist;
- Fig. 2: eine Seitenansicht der in Fig. 1 gezeigten Baugruppe;
- Fig. 3: eine geschnittene Seitenansicht der in Fig. 1 gezeigten Baugruppe; und
- Fig. 4: den Deckel der in Fig. 1 gezeigten Baugruppe.

### Ausführliche Beschreibung der Zeichnung

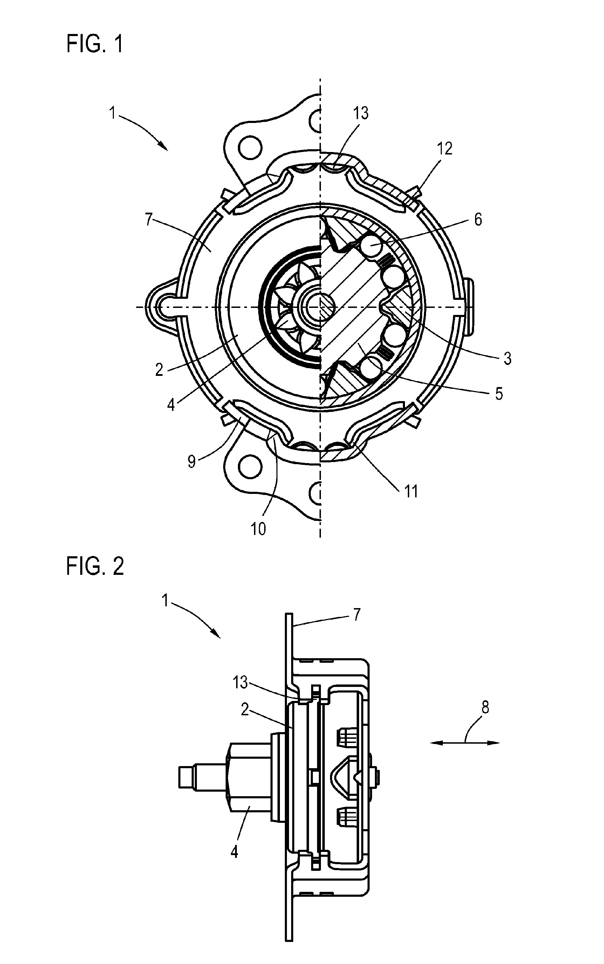

Die in den Fig. 1 bis 4 gezeigte Baugruppe 1 ist als in zwei Richtungen schaltbarer Freilauf ausgebildet und für die Sitzverstellung eines Kraftfahrzeugs vorgesehen. Die Baugruppe 1 umfasst ein Gehäuse 7, das an einer Stirnseite durch einen Deckel 2 verschlossen ist. Ein Antriebselement ist mit einem Stellring 3 verbunden, ein ein Ritzel 4 aufweisendes Abtriebselement ist mit einem Innenstern 5 verbunden. Zwischen dem Innenstern 5 und dem Stellring 3 sind Klemmrollen 6 federbelastet angeordnet, durch die die Baugruppe 1 in einer Neutralstellung gehalten wird. Durch eine Drehung des Antriebselements bewegt der Stellring 3 die Klemmrollen 6 und kommt in Kontakt mit dem Innenstern 5, sodass das Ritzel 4 gedreht wird. Derartige in zwei Richtungen schaltbare Freiläufe, die auch als Klemmgesperre bezeichnet werden, sind allgemein bekannt, beispielsweise aus der DE 195 49 548 C1, weshalb an dieser Stelle auf eine nähere Erläuterung verzichtet wird.

Bei der Montage muss darauf geachtet werden, dass die festgelegten Maße innerhalb der Toleranzen liegen. Um zu verhindern, dass sich die Toleranzen einzelner Bauteile in nachteiliger Weise addieren, sind das Gehäuse 7 und der Deckel 2 entlang der Längsachse ineinander verschiebbar. Durch diese axiale Verstellmöglichkeit kann das gewünschte bzw. maximal zulässige Spiel der Baugruppe 1 vor der Montage exakt eingestellt werden. Es ist auch möglich, das Gehäuse 7 und den Deckel so zu justieren, dass kein Spiel auftritt. Die Einstellung wird durch einen Schiebesitz zwischen den beteiligten Komponenten ermöglicht, der Deckel 2 ist dabei formschlüssig und axial verschiebbar in dem Gehäuse 7 angeordnet. Die Richtung der Verschiebung wird durch den Pfeil 8 angegeben. Im Bereich des Schiebesitzes 9, 10, 11 liegen Gehäuse 7 und Deckel 2 formschlüssig aneinander an, um eine Einstellung des Spiels zu ermöglichen. In dieser Position erfolgt das Crimpen, sodass Deckel 2 und Gehäuse 7 plastisch verformt und formschlüssig miteinander verbunden werden. Im Bereich der Crimpverbindung 12, 13 weist der Rand 14 des Gehäuses 7 Freistellungen auf, die die Herstellung der Crimpverbindungen 12, 13 erleichtern.

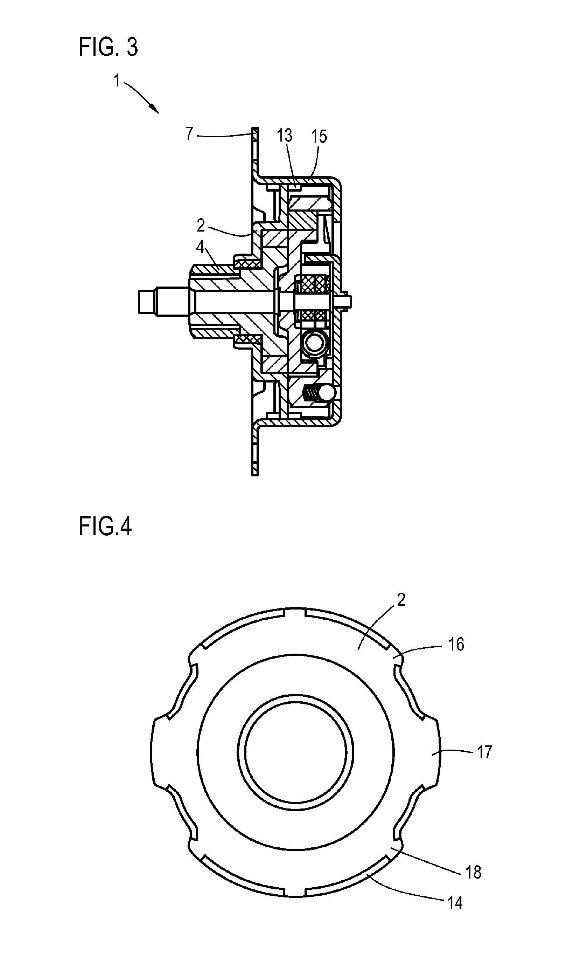

In den Fig. 2 und 3 ist besonders gut erkennbar, dass sich in Axialrichtung vor und hinter dem Rand des Deckels 2 Crimpverbindungen 13, 15 befinden, wodurch der Deckel 2 exakt an der gewünschten Position gehalten wird.

In Fig. 4 ist der Deckel 2 gezeigt, dessen Rand 14 Freistellungen 16, 17, 18 aufweist, um dort Crimpverbindungen zu erzeugen.

### Bezugszahlenliste

- 1: Baugruppe
- 2: Deckel
- 3: Stellring
- 4: Ritzel
- 5: Innenstern
- 6: Klemmrolle
- 7: Gehäuse
- 8: Pfeil
- 9: Schiebesitz
- 10: Schiebesitz
- 11: Schiebesitz
- 12: Crimpverbindung
- 13: Crimpverbindung
- 14: Rand
- 15: Crimpverbindung
- 16: Freistellung
- 17: Freistellung
- 18: Freistellung

## Patentansprüche

1. Baugruppe, insbesondere Verstellmechanismus, umfassend ein Gehäuse und ein mit diesem unter Einhaltung eines Maßes oder einer Maßtoleranz verbundenes Bauteil, insbesondere ein Deckel, **dadurch gekennzeichnet, dass** das Gehäuse (7) und das Bauteil entlang einer Achse, entlang der das Maß oder die Maßtoleranz einzuhalten ist, ineinander oder aneinander geschoben und durch Crimpen unter plastischer Verformung miteinander verbunden sind.

2. Baugruppe nach Anspruch 1, **dadurch gekennzeichnet, dass** das Gehäuse (7) und das mit diesem verbundene Bauteil, insbesondere der Deckel (2), vor dem Crimpen zum Einstellen der Maßtoleranz formschlüssig relativ zueinander verschiebbar sind.

3. Baugruppe nach Anspruch 1 oder 2, **dadurch gekennzeichnet, dass** das Gehäuse (7) einen Rand (14) und/oder einen Bund aufweist, der in dem gecrimpten Bereich unterbrochen ist.

4. Baugruppe nach einem der vorangehenden Ansprüche, **dadurch gekennzeichnet, dass** sie als Verstellmechanismus für eine Höhenverstellung oder eine Neigungsverstellung ausgebildet ist, insbesondere für eine Sitzverstellung eines Kraftfahrzeugs.

5. Baugruppe nach einem der vorangehenden Ansprüche, **dadurch gekennzeichnet, dass** sie als schaltbare Kupplung mit einem Freilauf ausgebildet ist, insbesondere für eine Sitzverstellung eines Kraftfahrzeugs.

6. Verfahren zur Montage einer Baugruppe, insbesondere eines Verstellmechanismus', bei dem ein Gehäuse mit einem Bauteil, insbesondere mit einem Deckel, unter Einhaltung einer Maßtoleranz verbunden wird, **dadurch gekennzeichnet, dass** das Gehäuse und das Bauteil entlang einer Achse, entlang der die Maßtoleranz einzuhalten ist, ineinander oder aneinander geschoben und durch Crimpen unter plastischer Verformung miteinander verbunden werden.

7. Verfahren nach Anspruch 6, **dadurch gekennzeichnet, dass** das Gehäuse und das mit diesem verbundene Bauteil, insbesondere der Deckel, vor dem Crimpen zum Einstellen der Maßtoleranz formschlüssig relativ zueinander verschoben werden.
